Europäisches Patentamt

European Patent Office

Office européen des brevets

(19)

(11) Numéro de publication: **0 167 773 B1**

(12) **FASCICULE DE BREVET EUROPEEN**

(45) Date de publication de fascicule du brevet:
24.07.91

(51) Int. Cl.⁵: **H04H 1/00, H04J 3/04**

(21) Numéro de dépôt: **85106514.4**

(22) Date de dépôt: **28.05.85**

(54) **Procédés de diffusion et de réception de programmes sonores de haute qualité et dispositif de réception.**

(30) Priorité: 29.05.84 FR 8408425

(43) Date de publication de la demande:
**15.01.86 Bulletin 86/03**

(45) Mention de la délivrance du brevet:
**24.07.91 Bulletin 91/30**

(84) Etats contractants désignés:
**BE CH DE FR GB IT LI NL SE**

(56) Documents cités:
**EP-A- 0 058 417
DE-A- 3 126 880**

**NACHRICHTENTECHNISCHE ZEITSCHRIFT
N.T.Z., volume 36, no. 11, novembre 1983,
pages 734-739, Berlin, DE; O. KLANK:
"Technik des Satelliten-Tonrundfunks"**

(73) Titulaire: **ALCATEL CIT
12 Rue de la Baume
F-75008 Paris(FR)**

(72) Inventeur: **Le Roy, Guy
Kergewan-Servel
F-22300 Lannion(FR)**
Inventeur: **Onno, Guy
Gouzabas St Quay Perros
F-22700 Perros-Guirec(FR)**

(74) Mandataire: **Weinmiller, Jürgen et al
Lennéstrasse 9 Postfach 24
W-8133 Feldafing(DE)**

## Description

L'invention concerne la diffusion de programmes sonores de haute qualité selon le préambule de la revendication 1. Elle concerne également un procédé et un dispositif de réception de tels programmes.

La diffusion de programmes sonores par voie hertzienne a recours à des porteuses analogiques modulées. A la réception, la sélection d'un programme est faite par recherche d'un accord sur la fréquence de la porteuse correspondant au programme désiré; ce type de diffusion offre une grande capacité, mais sa mise en oeuvre n'est pas simple.

On connaît par le document NACHRICHTENTECHNISCHE ZEITSCHRIFT N.T.Z., volume 36, n° 11, novembre 1983, pages 734-739, Berlin, DE; O. KLANK: "Technik des Satelliten-Tonrundfunks", un procédé de diffusion de programmes sonores stéréophoniques selon le préambule de la revendication 1. Chaque trame comprend un mot de synchronisation, des signaux droite et gauche d'un premier programme et des bits additionnels dont 1 bit pour identifier le genre du programme (sport, jazz, musique, opéra, etc), puis des signaux droite et gauche d'un deuxième programme et des bits additionnels, etc, une trame contenant huit programmes. Il n'est pas prévu d'avoir dans une même trame des programmes de différents types, c'est-à-dire monophoniques, stéréophoniques et quadriphoniques. D'autre part le débit du multiplex numérique, 20,48 Mbit/s, est inférieur à celui des réseaux diffusant des programmes vidéo, qui est de l'ordre de 100 Mbits/s, de sorte qu'il n'est pas possible d'utiliser ces réseaux pour la transmission de programmes sonores à 20 Mbit/s.

L'invention a pour but de proposer un procédé de transmission numérique de programmes sonores de types variables, donc monophoniques, stéréophoniques etc., et cela dans un réseau conçu pour transmettre des programmes vidéo. Ce but est atteint par le procédé tel qu'il est défini dans la revendication 1. En ce qui concerne des exemples préférés de mise en oeuvre de ce procédé et un dispositif de réception de tels programmes, référence est faite aux revendications secondaires.

L'invention va être décrite à l'aide d'un exemple de réalisation illustré par les figures annexées dans lesquelles:

La figure 1 représente un dispositif de réception de l'invention,

La figure 2 est un diagramme de différents signaux dans le dispositif de réception de la figure 1.

La figure 3 représente le circuit d'entrée de la figure 1.

La figure 4 représente à titre d'exemple un circuit de recherche du mot de synchronisation de la figure 1.

Il est bien connu de transformer un signal analogique en un signal numérique par le système de modulation par impulsions et codage (MIC), système selon lequel un signal analogique est converti en un signal numérique par échantillonnage, quantification et codage ; il est également connu de multiplexer plusieurs signaux numériques et de les assembler en trames pour constituer un multiplex numérique.

Selon le procédé de diffusion de programmes sonores de haute qualité de l'invention, un centre émetteur délivre chaque programme sonore de haute qualité sous forme numérique et assemble les signaux numériques de différents programmes en trames à haut débit pour constituer un multiplex numérique, de même rythme que le multiplex de transmission d'un programme vidéo, et ledit multiplex numérique est acheminé jusqu'aux points de réception.

Le multiplex numérique peut être acheminé jusqu'aux points de réception par voie hertzienne ou par liaisons câblées du type coaxial ou fibres optiques.

A chaque point de réception un dispositif de réception permet la sélection d'un programme par recherche de coïncidence entre le numéro, du programme choisi par l'utilisateur, ce numéro étant affiché au point de réception, et le numéro de la voie de la trame du multiplex numérique dans laquelle le programme est diffusé.

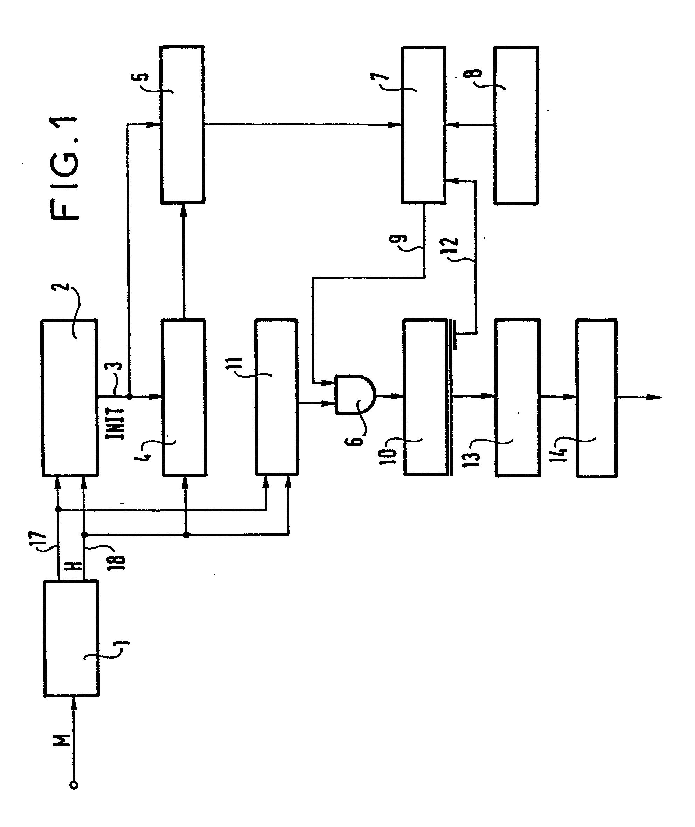

La figure 1 représente un dispositif de réception de l'invention. Un circuit d'entrée 1, est relié en entrée par une liaison multiplex M à un centre émetteur de programmes sonores de haute qualité. A titre d'exemple, la liaison multiplex a un débit de 96 Mbit/s, la fréquence d'échantillonnage étant de 32 kHz pour une largeur de bande de fréquences analogiques de 15 kHz ; les échantillons sont numérisés selon le système MIC (modulation par impulsions et codage) à raison de 16 bits par échantillon, ce qui permet, par exemple, d'affecter un bit à un contrôle de parité qui permet à la réception le masquage des échantillons détectés erronés, et un bit à l'indication du type de programme, mono ou stéréophonique, tout en conservant un nombre de bits suffisant, 14, pour le codage MIC des échantillons pour garantir une bonne qualité de transmission. Selon l'invention, deux bits sont affectés à l'indication du type de programme, mono, stéréo ou quadriphonique, en conservant 13 bits pour le codage MIC des échantillons. La qualité de la transmission serait alors éventuellement améliorée par la mise en oeuvre d'un codage avec compression.

Ces paramètres de codage conduisent à un débit de transmission de 512 kbit/s pour un programme monophonique, de 1024 kbit/s pour un programme stéréophonique et de 2048 kbit/s pour un programme quadriphonique. Avec un débit nominal de transmission de 96 Mbit/s pour le multiplex numérique, correspondant au rythme d'un multiplex de transmission d'un programme vidéo, la capacité de diffusion est de soit 186 programmes monophoniques, soit 93 programmes stéréophoniques, soit 46 programmes quadriphoniques, soit toute combinaison de m programmes monophoniques, s programmes stéréophoniques, et q programmes quadriphoniques telle que :

$$m.512 + s.1024 + q\ 2048 = 95232\ kbit/s,$$

ce qui laisse un débit de 768 kbit/s pour la synchronisation du multiplex numérique, cette synchronisation étant un mot de 24 bits à la fréquence de 32 kHz. Chaque trame du multiplex numérique comporte donc 186 voies à 16 bits pour la transmission des programmes et un mot de synchronisation à 24 bits. Un programme monophonique occupe donc une voie dans chaque trame, et un programme stéréophonique occupe deux voies successives dans chaque trame, une voie paire et la voie impaire suivante. Chaque trame peut également être utilisée pour la transmission de programmes quadriphoniques, un programme quadriphonique occupant alors, dans chaque trame, quatre voies successives, la première voie étant une voie de rang multiple de 4.

Le multiplex numérique peut bien entendu avoir des caractéristiques différentes de celles données ci-dessus à titre d'exemple. Ainsi il pourrait coexister dans le même multiplex numérique des programmes en mono, stéréo, quadri ou hexaphonie avec des modes de codage mettant en oeuvre des techniques de réduction de débit.

Le circuit d'entrée 1 qui est relié à la liaison multiplex M assure les fonctions bien connues de régénération et de récupération de rythme ; il délivre donc en sortie un signal d' informations binaires sur une liaison informations 17 et un signal d'horloge H sur une liaison horloge 18. Un circuit de recherche du mot de synchronisation 2, de type connu, est relié en entrée aux liaisons informations 17 et horloge 18, et délivre par une liaison d'initialisation 3 un signal d'initialisation INIT dont la durée est égale à celle des 24 bits du mot de synchronisation ; le signal d'initialisation a une fréquence de 32 KHz. Le signal d'initialisation est appliqué à un compteur de bits 4 et à un compteur de voies 5 qui sont ainsi forcés à zéro pendant toute la durée du mot de synchronisation. Le compteur de bits 4 est relié en entrée à la liaison horloge 18 et en sortie au compteur de voies 5. Le compteur de bits 4 est un compteur à 4 bits qui délivre une impulsion à une fréquence de 6000 kHz ; le compteur de voies 5 explore les 186 voies de la trame du multiplex numérique. Un comparateur 7 est relié d'une part à la sortie du compteur de voies 5 et d'autre part à la sortie d'un clavier 8 qui permet à l'utilisateur d'afficher un numéro de programme. Le comparateur 7 compare le numéro affiché par l'utilisateur et celui délivré par le compteur de voies 5, et délivre, par une ligne 9, une impulsion de coïncidence à une entrée d'une porte ET 6 ayant une autre entrée reliée à la sortie parallèle d'un registre 11, et sa sortie reliée à l'entrée parallèle d'un registre 10.

Le registre 11 est un registre à 16 bits du type série-parallèle, et a une entrée informations reliée à la liaison informations 17 et une entrée horloge reliée à la liaison horloge 18. Le registre 10 est un registre à 16 bits du type parallèle-parallèle, et est relié en sortie à un registre de contrôle de parité 13 ; en sortie du registre 10 le ou les deux bits d'indication du type de programme (mono, stéréo ou quadriphonique) sont également aiguillés, par une ligne 12, vers le comparateur 7 dans lequel chaque bit est appliqué à l'entrée d'un point mémoire. Le registre de contrôle de parité 13 est du type parallèle-parallèle, à 32 bits et sa sortie est reliée à un convertisseur numérique analogique 14 qui délivre le programme sélectionné sous une forme compatible avec les dispositifs classiques d'amplification.

Le multiplex numérique a 186 voies numérotées de 0 à 185 ; les programmes monophoniques occupent une voie quelconque, les programmes stéréophoniques occupent deux voies, une voie paire et la voie impaire suivante, et les programmes quadriphoniques une voie paire et les trois voies suivantes.

Si par exemple l'utilisateur n'a pas connaissance des programmes diffusés, donc de la constitution du multiplex numériques, et recherche un programme qui lui plaise, il affiche par son clavier un numéro de programme, donc de voie du multiplex numérique ; il ignore alors si le programme sonore correspondant, est mono, stéréo, ou quadriphonique ; le dispositif de réception doit lui restituer intégralement le programme diffusé et sélectionné. A titre d'exemple, dans le cas de la réalisation à 1 seul bit d'indication de programme, on suppose que l'utilisateur affiche la voie 15 ; au cours de la première trame reçue , et lorsque le compteur de voies 5 est sur la position 15, le comparateur 7 délivre une impulsion de coïncidence ; les seize bits de la voie 15 qui sont alors dans le registre 11 sont transférés dans le registre 10, et le bit d'indication du type de programme est également transféré au comparateur 7 dans lequel il est mémorisé.

Si le programme est monophonique, le bit d'indication du type de programme a la valeur 0, et à la trame suivante le comparateur 7 délivre une impulsion de coïncidence lorsqu' il reçoit le numéro de voie 15 du compteur de voie 5 ; et de même à chaque trame.

Si le programme est stéréophonique, le bit d'indication du type de programme a la valeur 1 ; ce bit de valeur 1 inhibe, dans le comparateur 7, la comparaison entre le bit de poids faible du numéro sélectionné par l'utilisateur et le bit de poids faible du numéro de la voie délivré par le compteur de voie. A la trame suivante, le comparateur 7 délivre alors une impulsion de coïncidence à la réception du numéro de voie 14 qui est la voie paire précédant la voie impaire 15, ce qui permet le transfert des bits correspondants du registre 11 dans le registre 10 ; le bit d'indication du type de programme de la voie 14 est envoyé au comparateur 7, ce bit ayant la valeur 1 puisque le programme est stéréophonique. Le comparateur 7 délivre également une impulsion de coïncidence à la réception du numéro de voie 15, ce qui permet le transfert des bits correspondants du registre 11 dans le registre 10. L'utilisateur reçoit donc, de cette manière les deux voies, 14 et 15 du programme stéréophonique. Bien évidemment, s'il avait sélectionné la voie 14 par son clavier il recevrait les voies 14 et 15 du programme stéréophonique. En effet, le bit de valeur 1, pour indiquer qu'il s'agit d'un programme stéréo, est mémorisé dans le comparateur 7, et inhibe, lors de la comparaison le bit de poids faible du numéro affiché et le bit de poids faible du numéro de voie. Ainsi lorsque le compteur de voies délivre le numéro 14 le comparateur délivre une impulsion de coïncidence qui permet le transfert du contenu du registre 11 dans le registre 10, de sorte que l'utilisateur reçoit les deux voies 14 et 15 de chaque trame. De cette façon l'utilisateur du programme stéréophonique peut sélectionner les programmes sans aucune contrainte, la réception étant automatiquement commutée en mono ou stéréo selon que le programme diffusé est lui même mono ou stéréophonique.

Dans le cas d'une réalisation à deux bits d'indication de programme, un programme quadriphonique occupe, dans la trame, une voie paire et les trois voies suivantes, c'est-à-dire deux voies paires et deux voies impaires. L'indication de ce type de programme est donnée, par exemple dans chacune des quatre voies, par deux bits de valeur 1 qui, dès que la première coïncidence entre le numéro affiché par l'utilisateur et le numéro de voie délivré par le compteur de voies 5 est détectée, sont transférés, en sortie du registre 10, dans le comparateur 7 où ils sont mémorisés afin d'inhiber les deux bits de poids faibles du numéro affiché et des numéros de voies délivrés par le compteur de voies 5 lors des comparaisons suivantes. La comparaison ne s'effectue alors que sur les bits de poids supérieur, et ainsi le comparateur 7 délivrera un signal de coïncidence dès réception d'un numéro de voie du programme quadriphonique, le numéro affiché correspondant à l'une quelconque des quatre voies successives du programme quadriphonique dans la trame du multiplex numérique. On supposera, à titre d' exemple, qu'un programme quadriphonique est diffusé dans les voies 20, 21, 22, 23 ; si l'utilisateur affiche la voie 23, dès la première comparaison bonne, le comparateur 7 délivre une impulsion de coïncidence qui permet le transfert du contenu du registre 11 dans le registre 10, et les deux bits d'indication du type de programme étant mémorisés dans le comparateur 7, à chaque trame suivante le comparateur délivrera une impulsion de coïncidence pour chacune des voies 20, 21, 22 et 23 reçues du compteur de voies. Si l'utilisateur affiche la voie 21, dès la première comparaison bonne le comparateur 7 délivre une impulsion de coïncidence qui permet le transfert du contenu du registre 11 dans le registre 10 et les deux bits d'indication du type de programme sont mémorisés dans le comparateur 7 qui délivre alors une impulsion de coïncidence pour chacune des voies 22 et 23 de la même trame, puis pour les voies 20, 21, 22, 23 de chacune des trames suivantes. Bien entendu, l'utilisateur peut aussi aficher la voie 20 ou la voie 22 ; les deux bits d'indication du type de programme étant mémorisés dès la première comparaison bonne, le comparateur 7 délivrera ensuite une impulsion de coïncidence chaque fois que le compteur de voies 5 délivrera les voies 20 à 23.

Le registre de contrôle de parité 13 est dimensionné pour les programmes quadriphoniques ; il effectue le contrôle de la parité des 16 bits de l'échantillon relatif à une voie ; dans le cas d'un programme stéréophonique ou quadriphonique, il contrôle successivement chaque échantillon de 16 bits. Le contrôle consiste à comparer la parité des 16 bits reçus avec le bit de parité inclus dans ces 16 bits. Si la parité n'est pas bonne, l'échantillon est supposé erroné et n'est pas transmis.

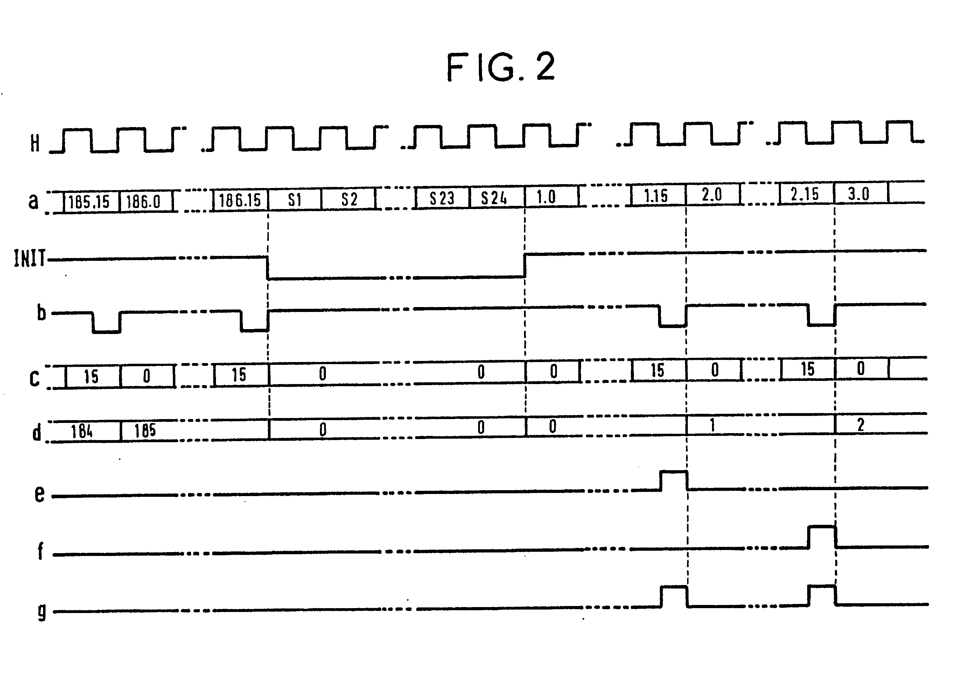

La figure 2 est un diagramme de différents signaux dans le dispositif de réception.

- H est le signal d'horloge délivré par le circuit d'entrée 1,
- a représente le multiplex numérique dans lequel les numéros de voies sont suivis du numéro de bit, par exemple 185.15 est le bit 15 de la voie 185 ; 186.0 et 186.15 sont les bits 0 et 15 de la voie 186 ; les bits du mot de synchronisation sont repérés S1, S2...S24 ;
- INIT est le signal d'initialisation délivré par le circuit de recherche du mot de synchronisation 2,
- b est le signal délivré par le compteur de bits 4 au compteur de voies 5,

- c représente l'état du compteur de bits 4 au cours du temps,
- d représente l'état du compteur de voies au cours du temps,
- e, f, g représentent le signal impulsion de coïncidence délivré par le comparateur 7, sur la ligne 9 dans trois cas de sélection de programme ; e dans le cas d'un programme monophonique dans la voie 0 du multiplex numérique,

  f dans le cas d'un programme monophonique dans la voie 1 du multiplex numérique,

  g dans le cas d'un programme stérophonique dans les voies 0 et 1 du multiplex numérique.

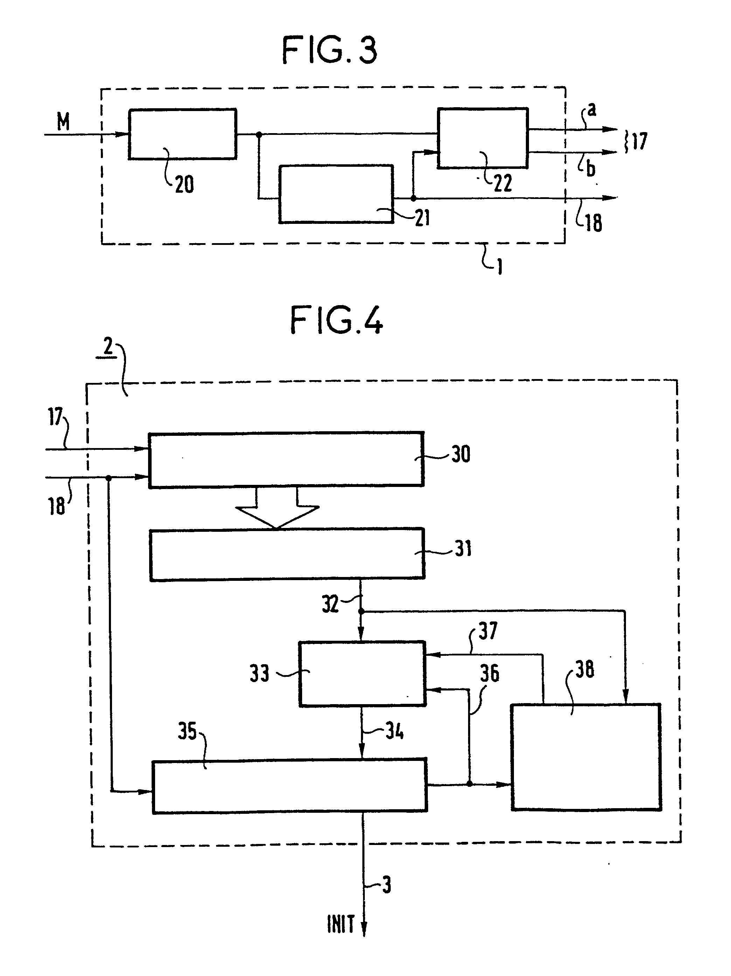

La figure 3 représente, à titre d'exemple, le circuit d'entrée 1 du dispositif de réception de la figure 1 ; dans cette figure, 20 est un dispositif d'adaptation, relié en entrée à la liaison multiplex M qui est par exemple une liaison coaxiale, et incluant un égaliseur fixe, de type connu, qui compense les irrégularité d'affaiblissement en fonction de la fréquence, 21 est un récupérateur de rythme, de type connu et par exemple réalisé sur la base d'un filtre sélectif passif tel qu'un filtre à ondes de surface, et 22 est un circuit de recalage en phase tel que par exemple une bascule de type D, délivrant des signaux symétriques sur la liaison information 17 constituée par deux fils a et b. Le dispositif d'adaptation 20 est relié en sortie au circuit de recalage en phase 22. Le récupérateur de rythme 21 est relié en entrée à la sortie du dispositif d'adaptation 20 et délivre le signal d'horloge récupérée H sur la liaison horloge 18 ; le signal d'horloge récupérée commande également le circuit de recalage en phase 22.

La figure 4 représente, à titre d'exemple, le circuit de recherche du mot de synchronisation 2 du dispositif de réception de la figure 1.

Dans cette figure, 30 est un registre à décalage à entrée série et sortie parallèle d'une capacité de 24 bits, relié en entrée à la liaison information 17 et à la liaison horloge 18 ; 31 est un dispositif de détection du mot de synchronisation recevant en entrée les 24 bits de sortie du registre 30 et relié à sa sortie par le fil 32 au dispositif 33 de sélection d'une imitation du mot de synchronisation. Ce dispositif 33 reçoit par ailleurs un signal de perte de verrouillage 37 et un instant de position théorique du mot de synchronisation par le fil 36, il fournit en 34 un signal de prépositionnement du compteur 35. Celui-ci est un compteur par 3000 recevant en son entrée le signal d'horloge 18 et fournissant un instant de position théorique du mot de synchronisation par le fil 36 et le signal d'initialisation INIT ; 38 est un dispositif de contrôle du verrouillage trame.

Le dispositif de réception de l'invention permet donc de sélectionner un programme dans un multiplex numérique contenant plusieurs programmes émis par un centre émetteur qui peut retransmettre par exemple uniquement les programmes de différents postes radiophoniques émetteurs ; dans ce cas les programmes sont généralement connus à l'avance notamment par des revues spécialisées donnant par exemple les émissions pour la semaine et indiquant la voie du multiplex numérique pour chaque programme avec éventuellement l'indication monophonique, stéréophonique ou quadriphonique. L'utilisateur désirant écouter un programme sélectionne la voie correspondante par son clavier. Si l'utilisateur n'a pas connaissance des programmes diffusés il peut, à l'aide de son clavier, afficher une voie quelconque et si le programme ne lui convient pas, afficher une autre voie ; il peut donc parcourir, voie par voie, l'ensemble des voies du multiplex numérique pour rechercher un programme à sa convenance ; cette façon de procéder est comparable à celle que l'utilisateur emploierait pour parcourir toute une gamme de fréquences sur un poste récepteur d'émissions radiophoniques. Comme indiqué lors de la description, l'utilisateur n'a pas à se soucier de savoir si le programme qu'il a sélectionné est monophonique stéréophonique ou quadriphonique.

Le centre émetteur peut également diffuser en plus, si le multiplex numérique le permet, des programmes sonores à la demande, ou ne diffuser que des programmes à la demande. L'utilisateur formule alors sa demande au centre émetteur, par exemple par téléphone ou par tout autre moyen de télécommunication, qui lui fournit une clé d'autorisation d'accès ou de décodage dans le cas d'une transmission cryptée, et le numéro de la voie, dans laquelle le programme demandé sera diffusé ; si le programme est stéréophonique ou quadriphonique, il suffit de donner à l'utilisateur le numéro d'une voie, la voie paire par exemple, le dispositif de réception recevant et transmettant automatiquement aux moyens d'écoute les deux voies, ou les quatre voies comme cela a été décrit précédemment.

Dans l'exemple de réalisation du dispositif de réception, illustré par la figure 1, la liaison multiplex M est reliée directement au centre émetteur dans le cas de liaison câblées de type coaxial. Dans le cas de liaisons câblées en fibres optiques, la liaison multiplex M est reliée à la sortie d'un dispositif de conversion non représenté des signaux numériques optiques, en signaux numériques électriques. Dans le cas où le multiplex numérique est acheminé par voie hertzienne, la liaison multiplex M est reliée à un récepteur, non représenté figure 1.

L'invention permet donc d'acheminer des programmes sonores de haute qualité, sous forme de multiplex numérique, jusqu'aux points de réception, ce qui permet l'utilisation, sans adjonction de ressources particulières, des réseaux de distribution développés pour les besoins de la diffusion de programmes vidéo.

## Revendications

1. Procédé de diffusion de programmes sonores de haute qualité à des points de réception par un centre émetteur délivrant chaque programme sous forme numérique, les signaux numériques de différents programmes étant assemblés en trames à haut débit pour constituer un multiplex numérique, chaque trame étant constituée par un mot de synchronisation et un certain nombre de voies, caractérisé par le fait que le multiplex numérique achemine simultanément différents programmes de type monophonique, stéréophonique, quadriphonique, occupant respectivement une voie, deux voies, quatre voies d'une trame, et que chaque voie de la trame achemine uniquement des signaux numériques d'un programme et une indication du type de programme, ladite indication étant donné par deux bits de la voie.

2. Procédé de diffusion selon la revendication 1, caractérisé par le fait qu'il utilise pour la distribution les équipements de transmission et de commutation d'un système de transmission de programmes vidéo entre le centre émetteur et les points de réception.

3. Procédé de diffusion selon la revendication 1, caractérisé par le fait qu'un programme stéréophonique est diffusé dans une voie paire et la voie impaire suivante, et qu'un programme quadriphonique est diffusé dans une voie paire et les trois voies suivantes.

4. Procédé de diffusion de programmes sonores selon la revendication 1, caractérisé par le fait que le multiplex numérique est acheminé par liaisons câblées à partir du centre émetteur jusqu'aux points de réception.

5. Procédé de réception de programmes sonores diffusés par le procédé selon l'une des revendications 2 et 3, caractérisé par le fait que l'on sélectionne un progamme par comparaison, à chaque trame, entre un numéro de programme affiché par un utilisateur au point de réception et le numéro d'une voie du multiplex numérique, que l'on détecte et mémorise, dès la première comparaison bonne, l'indication du type de programme, ou les deux bits d'indication, contenus dans la voie du multiplex numérique correspondant au numéro de programme affiché pour inhiber lors des comparaisons suivantes, certains bits, ou le bit de poids faible dans le cas d'un programme stéréophonique et les deux bits de poids faible dans le cas d'un programme quadriphonique, des numéros de voies et du numéro de programme affiché.

6. Dispositif de réception de programmes sonores pour la mise en oeuvre du procédé de réception selon la revendication 5 , caractérisé par le fait qu'il comporte un circuit d'entrée (1) relié en entrée à une liaison multiplex (M) acheminant dans des voies d'une trame des programmes sonores sous forme numérique, et relié en sortie à une liaison information (17) et à une liaison horloge (18) sur laquelle il délivre un signal d'horloge récupérée (H), un circuit de recherche d'un mot de synchronisation (2) de la trame relié en entrée au circuit d'entrée par la liaison informations (17), et en sortie à un compteur de bits (4) et a un compteur de voies (5) par une liaison d'initialisation (3) sur laquelle il délivre un signal d'initialisation (INIT), le compteur de bits étant relié en entrée à la liaison horloge (18) et en sortie au compteur de voies, un comparateur (7) relié en entrée au compteur de voies et à un clavier (8) qui permet d'afficher un numéro de programme, un premier registre (11) du type série parallèle relié en entrée à la liaison informations (17) et ayant une entrée de commande reliée à la liaison horloge (18), une porte ET (6) ayant une entrée reliée à la sortie parallèle du premier registre et une autre entrée reliée à la sortie du comparateur (7), un deuxième registre (10) du type parallèle parallèle relié en entrée à la sortie de la porte ET et, en sortie à un registre de contrôle de parité (13) lui même relié en sortie à un convertisseur numérique/analogique (14), le deuxième registre (10) étant relié en sortie au comparateur (7) par une ligne (12) qui achemine deux bits d'indication du type de programme, le comparateur (7) mémorisant lesdits bits d'indication du type de programme.

## Claims

1. A method of broadcasting high-quality sound programs to reception points by a broadcast center, adapted to deliver each program in digital form, the digital signals of the different programs being assembled in high data rate frames to constitute a digital multiplex system, with each frame being composed of a synchronizing word and of a certain plurality of channels, characterized in that the digital multiplex simultaneously conveys different types of programs such as monophonic, stereophonic and quadraphonic ones, respectively occupying one, two or four channels in a frame, and in that each frame only conveys digital signals of a program and an indication of the type of program, said indication being provided by two bits of the channel.

2. A broadcasting method according to claim 1, characterized in that it uses, for the purpose of broadcasting, the transmission and switching equipment of a video program transmission system existing between the broadcast center and the reception points.

3. A broadcasting method according to claim 1, characterized in that a stereophonic program is broadcast in an even-numbered channel and in the following odd-numbered channel, and that a quadraphonic program is broadcast in an even-numbered channel and in the three following channels.

4. A method of broadcasting sound programs according to claim 1, characterized in that the digital multiplex signals are conveyed by cable links from the broadcast center to the reception points.

5. A method of receiving sound programs broadcast by the method of claim 2 or 3, characterized in that in each frame, a program is selected by comparing a program number displayed by a user at the reception point with a channel number in the digital multiplex; and that, at a first accepted comparison, the program type indication or the pair of indication bits contained in the digital multiplex channel corresponding to the displayed program number is detected and stored in order to inhibit, during subsequent comparisons, certain bits or the least significant bit in the case of a stereo program, and the two least significant bits in the case of a quadrophonic program of the displayed channel numbers and of the displayed program number.

6. A sound program receiver device for implementing the reception method according to claim 5, characterized in that it comprises: an input circuit (1) having its input connected to a multiplex link (M) conveying sound programs in digital form in the channels of a frame, and having its output connected to a data link (17) and to a clock link (18) through which it delivers a recovered clock signal (H), a circuit (2) for finding a frame synhronization word having its input connected to the input circuit via the data link (17) and having its output connected to a bit counter (4) and to a channel counter (5) via an initialization link (3), through which it delivers an initialization signal (INIT), the bit counter having its input connected to the clock link (18) and having its output connected to the channel counter, a comparator (7) having inputs connected to the channel counter and to a keyboard (8) adapted to display a program number, a first register (11) of the series-parallel type having its input connected to the data link (17) and having a control input connected to the clock link (18), and an AND gate (6) having an input connected to the parallel output from the first register and having another input connected to the output of the comparator (7), a second register (10) of the parallel-parallel type having its input connected to the output of the AND gate and having its output connected to a parity check register (13), which in turn has its output connected to the digital-to-analog converter (14) the second register (10) having its output connected to the comparator (7) via a line (12) which conveys two bits for indicating the program type, the comparator (7) storing said indication bits of the program type.

**Patentansprüche**

1. Verfahren zur Diffusion von hochwertigen Tonprogramme an Empfangsstellen durch ein Sendezentrum, das jedes Programm digital übermittelt, wobei die Digitalsignale verschiedener Programme in Rahmen großer Bitkapazität zur Bildung eines Digitalmultiplexsignals vereinigt sind und jeder Rahmen aus einem Synchronisierungswort und einer bestimmten Anzahl von Kanälen besteht, dadurch gekennzeichnet, daß das Digitalmultiplexsignal gleichzeitig verschiedene Programme monophonischer, stereophonischer und quadrophonischer Art überträgt, die einem einzigen Kanal bzw. zwei Kanäle bzw. vier Kanäle besetzen, und daß jeder Kanal des Rahmens nur digitale Signale eines einzigen Programms und eine Anzeige der Programmart überträgt, wobei die Anzeige durch zwei Bits des Kanals erfolgt.

2. Diffusionsverfahren nach Anspruch 1, dadurch gekennzeichnet, daß es für die Verteilung die Übertragungs- und Schalteinrichtungen eines zwischen dem Diffusionszentrum und den Empfangsstellen bestehenden Videoprogrammübertragungssystems benutzt.

3. Diffusionsverfahren nach Anspruch 1, dadurch gekennzeichnet, daß ein stereophonisches Programm über einen geradzahligen Kanal und den nachfolgenden ungeradzahligen Kanal übertragen wird und daß ein quadrophonisches Programm über einen geradzahligen Kanal und die drei nachfolgenden Kanäle übertragen wird.

4. Diffusionsverfahren für Tonprogramme nach Anspruch 1, dadurch gekennzeichnet, daß das digitale Multiplexsignal vom Sendezentrum zu den Empfangsstellen durch Kabelstrecken übermittelt wird.

5. Verfahren zum Empfangen von Tonprogrammen, deren Diffusion durch das Verfahren nach einem der Ansprüche 2 und 3 erfolgt, dadurch gekennzeichnet, daß man ein Programm auswählt, in dem in jedem Rahmen eine von einem Benutzer an der Empfangsstelle angegebenen Programmnummer mit einer Kanalnummer des Multiplexsignals verglichen wird, daß man nach dem ersten richtigen Vergleich die Anzeige der Programmart oder die beiden Anzeigebits, die in dem einer angezeigten Programmnummer entsprechenden Kanal des Multiplexsignals enthalten sind, erfaßt und speichert, um bei nachfolgenden Vergleichen bestimmte Bits, bzw. das niederrangige Bit im Fall eines stereophonischen Programms und die beiden niederrangigen Bits im Fall eines quadrophonischen Programm der Kanalnummern und der angezeigten Preogrammnummer zu inhibieren.

6. Einrichtung zum Empfangen von Tonprogrammen zur Durchführung des Empfangsverfahrens nach Anspruch 5, dadurch gekennzeichnet, daß sie folgende Bestandteile aufweist: eine Eingangsschaltung (1), die mit ihrem Eingang an eine Multiplexstrecke (M) angeschlossen ist, welche in Kanälen eines Rahmens Tonprogramme in Digitalform übermittelt, und die mit ihrem Ausgang an eine Informationsverbindung (17) sowie an eine Taktverbindung (18) angeschlossen ist, an die sie ein wiedergewonnenes Taktsignal (H) liefert, eine Schaltung (2) zum Suchen eines Rahmen-Synchronisierungsworts, die mit ihrem Eingang über die Informationsverbindung (17) an die Eingangsschaltung, und mit ihrem Ausgang über eine Initialisierungsverbindung (3) an einen Bitzähler (4) und einen Kanalzähler (5) angeschlossen ist, wobei über die Initialisierungsverbindung ein Initialisierungssignal (INIT) geliefert wird und der Bitzähler mit dem Eingang an die Taktverbindung (18) und mit dem Ausgang an den Kanalzähler angeschlossen ist, einen Komparator (7), der mit dem Eingang an den Kanalzähler und an eine Tastatur (8) angeschlossen ist, die die Anzeige einer Programmnummer ermöglicht, ein erstes Register (11), das mit seinem Reiheneingang an die Informationsverbindung (17) angeschlossen ist und einen mit der Taktverbindung (18) verbundenen Steuereingang besitzt, ein UND-Tor (6), das mit einem Eingang an den Parallelausgang des ersten Registers und mit einem anderen Eingang an den Ausgang des Komparators (7) angeschlossen ist, und ein zweites Register (10), das mit seinem Paralleleingang an den Ausgang des UND-Tors und mit seinem Parallelausgang an ein Paritätskontrollregister (13) angeschlossen ist, das seinerseits mit dem Ausgang an einen Digital-Analog-Wandler (14) angeschlossen ist, wobei das zweite Register (10) mit seinem Ausgang über eine Leitung (12), die zwei Anzeigebits für die Programmart übermittelt, an den Komparator (7) angeschlossen ist, und der Komparator (7) diese Anzeigebits für die Programmart speichert.

FIG.1

FIG. 2

# FIG.3

# FIG.4